Europäisches Patentamt

European Patent Office

Office européen des brevets

(19)

(11) Publication number : **0 323 265 B1**

(12) **EUROPEAN PATENT SPECIFICATION**

(45) Date of publication of patent specification :
30.08.95 Bulletin 95/35

(51) Int. Cl.⁶ : **H04N 1/46**

(21) Application number : **88312421.6**

(22) Date of filing : **29.12.88**

(54) **Method of processing color image and apparatus therefor.**

(30) Priority : **29.12.87 JP 334791/87**

(43) Date of publication of application :
**05.07.89 Bulletin 89/27**

(45) Publication of the grant of the patent :
**30.08.95 Bulletin 95/35**

(84) Designated Contracting States :
**DE FR GB IT NL**

(56) References cited :
**EP-A- 0 266 186**
**EP-A- 0 267 566**
**DE-A- 3 313 392**
**GB-A- 2 202 708**
**PATENT ABSTRACTS OF JAPAN vol. 12, no.**
**256 (E-635) 19 July 1988, & JP-A-63 042576**
**(CANON) 23 February 1988,**

(73) Proprietor : **CANON KABUSHIKI KAISHA**
**30-2, 3-chome, Shimomaruko,**
**Ohta-ku**
**Tokyo (JP)**

(72) Inventor : **Suzuki, Akio**
**A204, 19-2, Higashi Teraokitadai**
**Tsurumi-ku**
**Yokohama-shi Kanagawa-ken (JP)**
Inventor : **Takada, Yoshihiro**
**1133-301, Shimoodanaka**
**Nakahara-ku**
**Kawasaki-shi Kanagawa-ken (JP)**
Inventor : **Izumizaki, Masami**
**39-18, Aoto 6-chome**
**Katsushika-ku Tokyo (JP)**

(74) Representative : **Beresford, Keith Denis Lewis**
**et al**
**BERESFORD & Co.**
**2-5 Warwick Court**
**High Holborn**
**London WC1R 5DJ (GB)**

EP 0 323 265 B1

## Description

The present invention relates to a method of processing a color image and an apparatus therefor.

In a conventional color image forming system, primary color signals, e.g., Y, M, and C signals obtained by reading a color image are processed, the processed signals are subjected to UCR (Under Color Removal) to obtain Y, M, and C signals for printing colors on a recording medium and the Bk (black) signal obtained by multiplying a minimum value of the Y, M, and C signals with a predetermined ratio, and a color image is formed as a visible image on a recording medium such as paper by using Y, M, C, and Bk inks.

However, when a UCR amount or an inking amount is increased, a saturation level of a portion having a low density, i.e., a bright portion is degraded, and image quality is degraded. For this reason, a balancing point among a maximum saturation level of a low density, a "solid" black area in a high-density portion, and ink offset (transfer of an ink to an object except for the recording medium) must be found to determine a UCR amount and an inking amount.

In order to cope with these problems, a journal of the Institute of Electrophotography, vol. 24, PP. 60 - 67 describes a technique wherein a threshold value is set for a UCR amount, and UCR and inking operations are not performed until a minimum value $K_0$ of the Y, M, and C signals exceeds a threshold value T. UCR and inking operations are performed only when the minimum value $K_0$ exceeds the threshold value T.

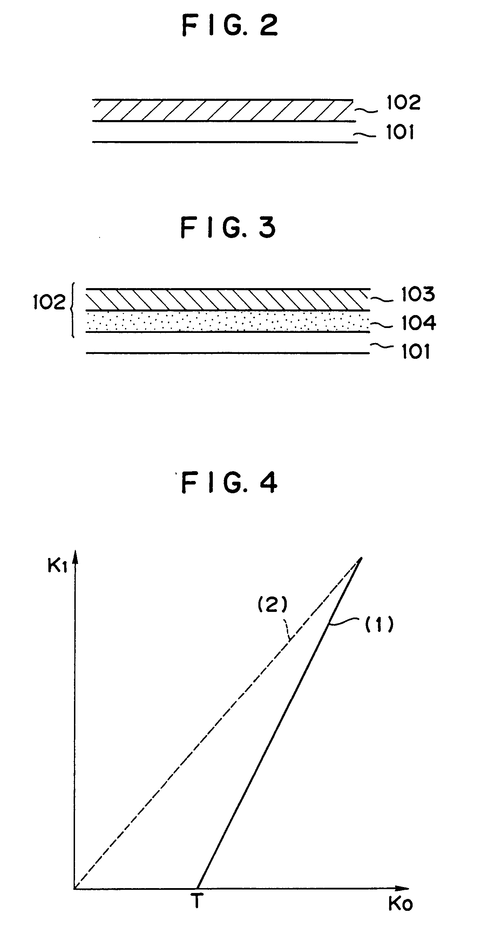

In processing using such a threshold value T, in order to obtain a maximum black ink amount in a high-density portion and eliminate offset, a gamma correction level of a black signal must be set at a higher level (dotted line (2) in Fig. 4) as compared with a case wherein the threshold value T is not given as indicated by a solid line (1) in Fig. 4. A black ink amount is plotted along the ordinate of Fig. 4, while the minimum value $K_0$ is plotted along the abscissa. When the minimum value $K_0 = \min(C,M,Y)$ exceeds the threshold value T, an amount of black ink is abruptly increased, and printing is started. Black has a higher contrast level than those of cyan, magenta, and yellow when these colors are visually observed. A start black portion upon printing tends to be typically noticed as compared with the remaining black portion, as if a pseudo edge is present between the start black portion and the remaining black portion. For this reason, the UCR amount and the inking amount cannot be sufficiently increased in this method.

It is a concern of the present invention to eliminate some or all the conventional problems described above.

It is another concern of the present invention to provide a method of processing a color image and an apparatus therefor, wherein a decrease in saturation level in a low-density portion and the pseudo edge formed by the threshold value are perfectly eliminated, and a good color image can be reproduced.

According to an aspect of the present invention, there is provided a method of processing a color image, comprising the steps of operating primary color signals obtained by reading the color image to obtain three-color reproduction signals and a black reproduction signal to reproduce the color image by using these reproduction signals, wherein a given value corresponding to a minimum value of the primary color signals and a value obtained by converting the given value by a continuous function having a minimum peak are used as the black reproduction signal.

It is still another concern of the present invention to provide an image processing apparatus capable of performing good image recording in a serial scan type printer and a method thereof.

It is still another concern of the present invention to provide a method of processing an image and an apparatus therefor wherein good image recording is performed in an ink-jet type printer.

It is still another concern of the present invention to provide an image processing apparatus and a method thereof wherein good image recording can be performed on a recording medium (e.g. a back-print film) having a low ink retaining capacity.

Accordingly, from a first aspect the present invention provides a method of processing color signals as set out in claim 1.

From a second aspect, the present invention provides apparatus for processing color signals as set out in claim 10.

The present invention will be more clearly understood from the following detailed description of preferred embodiments given in conjunction with the accompanying drawings, in which:

Fig. 1 is a block diagram of a color image processing apparatus embodying the present invention;

Figs. 2 and 3 are sectional views of recording media used;

Fig. 4 is a graph showing an inking operation according to conventional image processing;

Fig. 5 is a schematic perspective view of an ink-jet printer 90;

Fig. 6A is a graph showing a UCR operation of an embodiment of the present invention and a conventional UCR operation;

Fig. 6B is a graph showing an inking operation of an embodiment of the present invention and a conventional inking operation;

Fig. 7 is a graph showing an inking operation according to a first embodiment of the present invention;

Fig. 8 is a block diagram showing a second embodiment of the present invention;

Fig. 9 is a graph showing UCR and inking cubic functions used in the second embodiment of the present invention;

Figs. 10A and 10B shows UCR and inking functions used in a third embodiment of the present invention;

Fig. 11 is a graph showing a UCR and inking function of an embodiment of the present invention when an offset is given to the function; and

Figs. 12A and 12B are views showing states in which images are printed by an ink-jet printer.

Preferred embodiments of the present invention will be described with reference to the accompanying drawings.

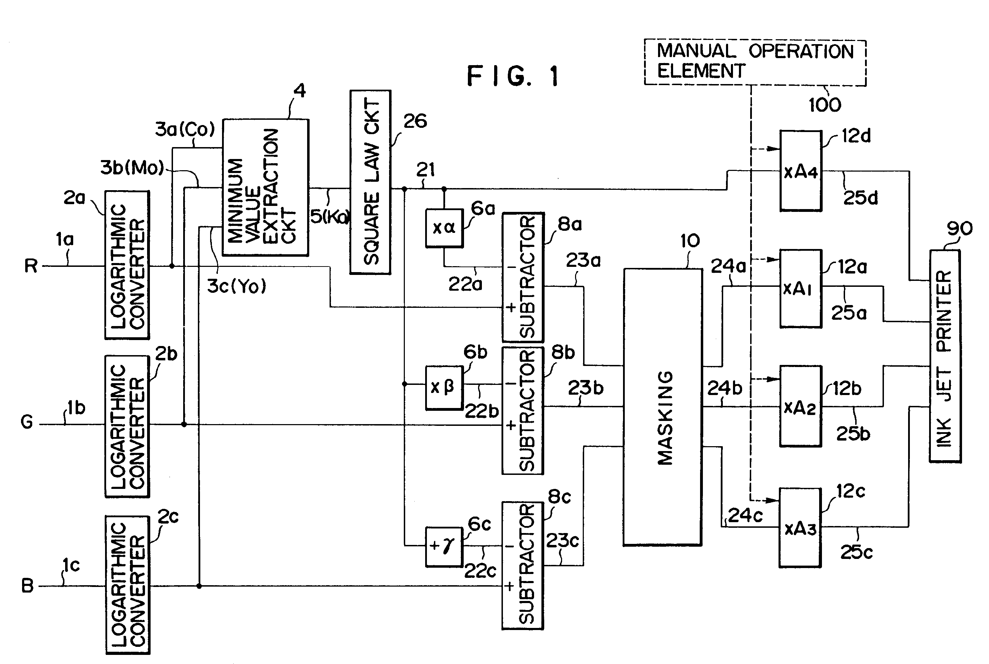

Fig. 1 is a block diagram of a color image processing apparatus according to a first embodiment of the present invention. Red, green, and blue input signals 1a, 1b, and 1c are converted into density signals 3a, 3b, and 3c by logarithmic converters 2a, 2b, and 2c, respectively. The density signal 3a is a cyan density signal; 3b, a magenta density signal; and 3c, a yellow density signal. A minimum value $K_0$ of the cyan, magenta, and yellow signals is extracted by a minimum value extraction circuit 4 and is output as a signal 5. The minimum value is extracted as follows:

$$K_0 = \min(C_0, M_0, Y_0) \quad (1)$$

where $C_0$ is the cyan density signal 3a, $M_0$ is the magenta density signal 3b, and $Y_0$ is the yellow density signal 3c.

The signal 5 is converted into $K_0^2$ by a square law circuit 26. The square law circuit 26 may be a multiplier or a ROM. The $K_0^2$ output is multiplied with $\alpha$, $\beta$, and $\gamma$ by multipliers 6a to 6c. Outputs from the multipliers 6a to 6c are input to the inverting input terminals of subtractors 8a to 8c, respectively. The signals 3a to 3c are input to the noninverting input terminals of the subtractors 8a to 8c, respectively.

If outputs 23a to 23c from the subtractors 8a to 8c are represented by $C_1$, $M_1$, and $Y_1$, respectively, they are given by:

$$C_1 = C_0 - \alpha K_0^2 \quad (2)$$
$$M_1 = M_0 - \beta K_0^2 \quad (3)$$
$$Y_1 = Y_0 - \gamma K_0^2 \quad (4)$$

The outputs ($C_1$, $M_1$, and $Y_1$) from the subtractors 8a to 8c are input to a masking processor 10. The masking processor 10 performs color correction of the $C_1$, $M_1$, and $Y_1$ components as follows:

$$C_2 = a_{11}C_1 + a_{12}M_1 + a_{13}Y_1 \quad (5)$$
$$M_2 = a_{21}C_1 + a_{22}M_1 + a_{23}Y_1 \quad (6)$$
$$Y_2 = a_{31}C_1 + a_{32}M_1 + a_{33}Y_1 \quad (7)$$

Signals 24a, 24b, and 24c (i.e., $C_2$, $M_2$, and $Y_2$) output from the masking processor 10 are input to gamma correction circuits 12a to 12c and are multiplied with coefficients $A_1$, $A_2$, and $A_3$, respectively. Outputs from the gamma correction circuits 12a to 12c appear as image recording signals 25a to 25c. If the signals 25a to 25c are represented by $C_3$, $M_3$, and $Y_3$, they are given by:

$$C_3 = A_1 \times C_2 \quad (8)$$
$$M_3 = A_2 \times M_2 \quad (9)$$

$$Y_3 = A_3 \times Y_2 \quad (10)$$

The signal 5 extracted by the minimum value extraction circuit 4 is multiplied with $A_4$ by the gamma correction circuit 12d, and the product is output as a black signal 25d. This black signal 25d is represented by $K_1$ which is given by:

$$K_1 = A_4 \times K_0^2 \quad (11)$$

The $C_3$, $M_3$, $Y_3$, and $K_1$ signals serve as cyan, magenta, yellow, and black image signals, respectively, and an image is formed at the ink-jet printer, thereby reproducing a full-color image.

An operation by equation (1) is called black extraction, and operations by equations (2), (3) and (4) are called UCR, and an operation by equation (11) is called inking.

An arrangement of the ink-jet printer 90 used in this embodiment will be described below.

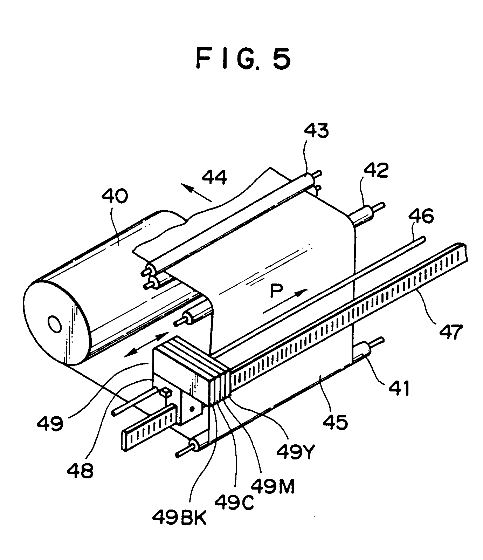

Fig. 5 is a schematic perspective view of the ink-jet printer 90.

Referring to Fig. 5, a recording medium 45 drawn from a roll of recording medium 40 is clamped between feed rollers 43 through convey rollers 41 and 42 and is fed in a direction of an arrow 44. Guide rails 46 and 47 are parallel to each other so as to cross the recording medium 40. A recording head unit 49 mounted on a carriage 48 is reciprocated. Yellow, magenta, cyan, and black heads 49Y, 49M, 49C, and 49Bk are mounted on the carriage 48. Yellow, magenta, cyan, and black ink tanks are connected to these heads 49Y, 49M, 49C, and 49Bk, respectively. The recording medium 45 is intermittently fed by a printing width of each recording head 49. The recording heads 49 are moved in a direction of an arrow P, while the recording medium 45 is kept stopped, thereby injecting ink drops corresponding to an image signal.

The recording medium consists of paper or any other material. As shown in Fig. 2, the recording medium may be a so-called back-print film comprising a transparent substrate 101 and an ink absorbing layer 102. An ink is injected from the side of the ink absorbing layer 102, and an image is observed from the side of the transparent substrate 101. Since an image is observed from the transparent substrate side in the back-print film, an image density can be increased, and a portion of the ink absorbing layer which is exposed to outer air can be reduced, thereby preventing bleaching. The back-print film has a low ink retaining capacity. In particular, an image may be degraded in ink-jet recording. According to the image processing method of the present embodiment, image degradation can be minimized or eliminated.

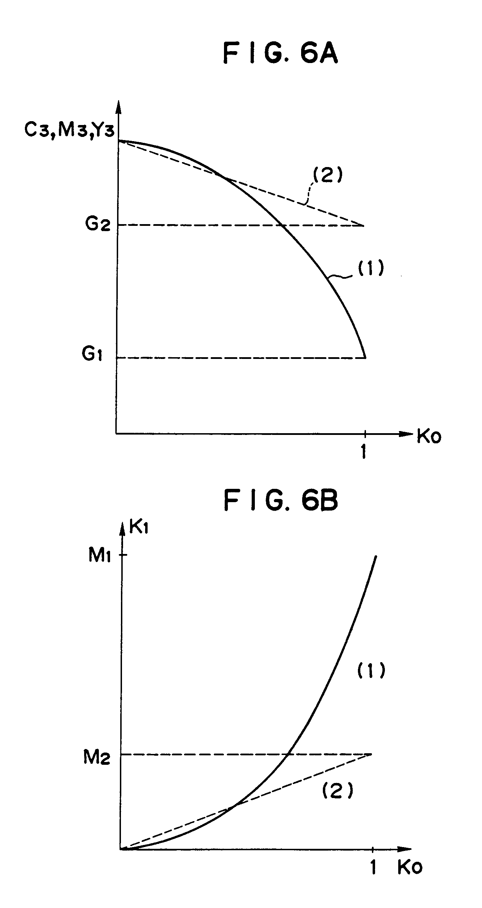

Since the above-mentioned image processing is performed in this embodiment, the amounts of the cyan (C), magenta (M), and yellow (Y) image recording signals are represented by a curve (1) in Fig. 6A, while the amount of the black image recording signal is represented by a curve (1) in Fig. 6B. The Y, M, and C ink amounts are plotted along the abscissa in Fig.

6A, while the minimum value $K_0$ is plotted along the ordinate. According to the conventional UCR technique, a UCR amount indicated by a line (2) in Fig. 6A cannot be greatly increased so as to prevent a decrease in saturation level in a low-density portion. Therefore, the color ink amounts can be reduced to only a level $G_2$. However, according to this embodiment, the minimum value $K_0$ is squared by the square law circuit 26, and therefore, the color ink amounts can be reduced to a level $G_1$ in Fig. 6A.

In order to prevent a decrease in saturation level in a low-density portion during inking, an operation must be performed, as indicated by a curve (2) in Fig. 6B. Therefore, the black ink is added up to only a level $M_2$ even for a maximum density. However, according to this embodiment, the amount of black ink can be increased up to a level $M_1$ in Fig. 6B. The amount of black ink is plotted along the ordinate in Fig. 6B, while the minimum value $K_0$ is plotted along the abscissa.

A characteristic curve for the black ink amount has a small gradient in a low-density portion. When the density of the image is increased, this gradient is increased. An increase in amount of black ink used at the start of printing in a low-density portion can be small, and a pseudo edge tends not to appear.

In this embodiment, the UCR amount and the inking amount are represented by quadratic functions to obtain optimal UCR and inking amounts without causing a decrease in saturation level in the low-density portion and occurrence of a pseudo edge. In addition, a total amount of ink to be used can be minimized, and high-quality full-color image recording can be performed without causing ink blurring, offset of the ink from the recording medium to a medium convey member, and stripes formed between scanning cycles.

The back-print film having the structure shown in Fig. 2 has various advantages described above. However, when an amount of ink is increased, "blurring" tends to occur due to a relatively small thickness of the ink absorbing layer. Since a total amount of ink can be reduced in this embodiment, "blurring" can be effectively prevented. In order to obtain a better effect, when a back-print film is used, a back-print film designation signal is input from a manual operation element 100 indicated by a broken block in Fig. 1, and the mode of operation of the gamma correction circuits 12a, 12b, 12c, and 12d may be changed. Alternatively, the mode of operation of the square law circuit 26 may be changed.

A second embodiment of the present invention will be described below.

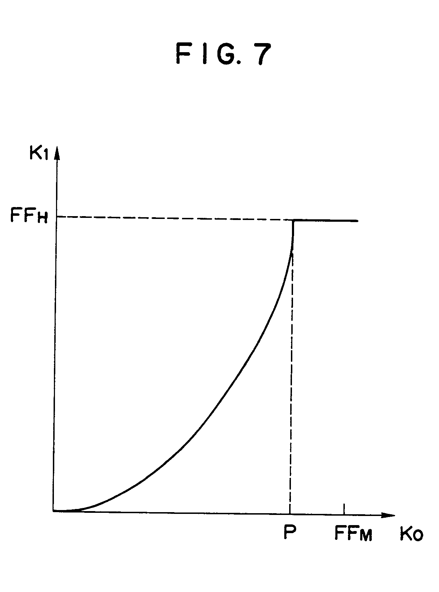

In the first embodiment, the UCR and inking amounts are represented by quadratic functions. In this case, when a gamma correction amount $A_4$ of the black image signal is increased, the gradation of the black components in the high-density portion is undesirably lost, as shown in Fig. 7. Gamma-converted minimum values $K_1$ are plotted along the ordinate in Fig. 7, while the minimum values $K_0$ before gamma conversion are plotted along the abscissa. Gamma conversion is performed using an 8-bit signal. In order to improve "solidity" of the black area in the intermediate- and high-density portions, when the value $A_4$ multiplied by the gamma correction circuit is increased, a black value is saturated to be $FF_H$ in the area of a density higher than P. In other words, the gradation of the black components cannot be expressed in the range of $P \leqq K_0 \leqq FF_H$.

The second embodiment provides an improvement in view of this drawback. UCR and inking amounts are represented by cubic functions.

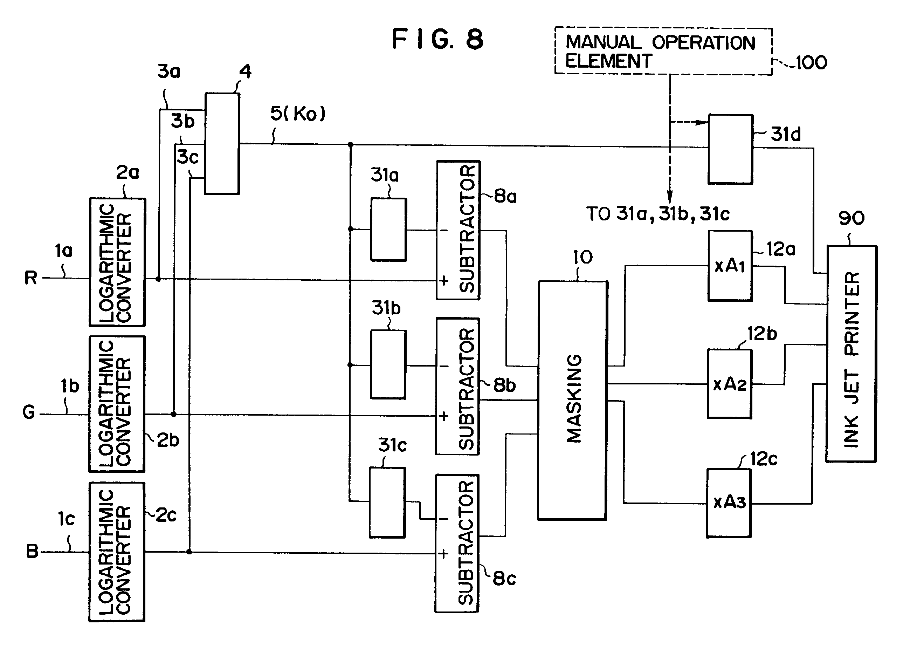

A circuit arrangement of the second embodiment is shown in Fig. 8. The same reference numerals as in Fig. 1 denote the same parts in Fig. 8.

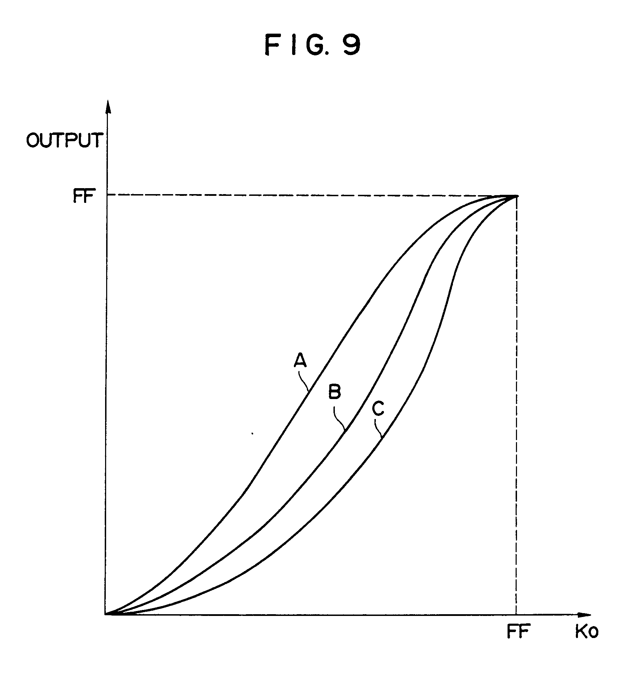

Cubic function generators 31a to 31d comprise a ROM or the like. Each of the cubic function generators 31a to 31d stores a plurality of cubic functions f $= f(K_0)$ which pass two points (0,0) and $(FF_H, FF_M)$, as indicated by curves A, B, and C in Fig. 9 in response to an input $K_0$. One of the characteristic curves is selected in accordance with a selection signal (not shown). UCR operations are performed by subtractors 8a to 8c using the values of the selected cubic function. A gamma correction circuit multiplies the value of the cubic function with the predetermined value $A_4$ to output the product as a black image signal.

The following conditions are required for the cubic function of this embodiment:

(1) A cubic function must pass two points (0,0) and (FF,FF); and

(2) A $df/dK_0$ value is linearly increased within the range of $0 < f \leqq G$ ($0 < G \leqq FF$).

Condition (1) is required to prevent saturation of the black components in a high-density portion. Condition (2) is required to prevent a decrease in saturation level in a low-density portion and generation of a pseudo edge.

Still another embodiment of the present invention will be described below.

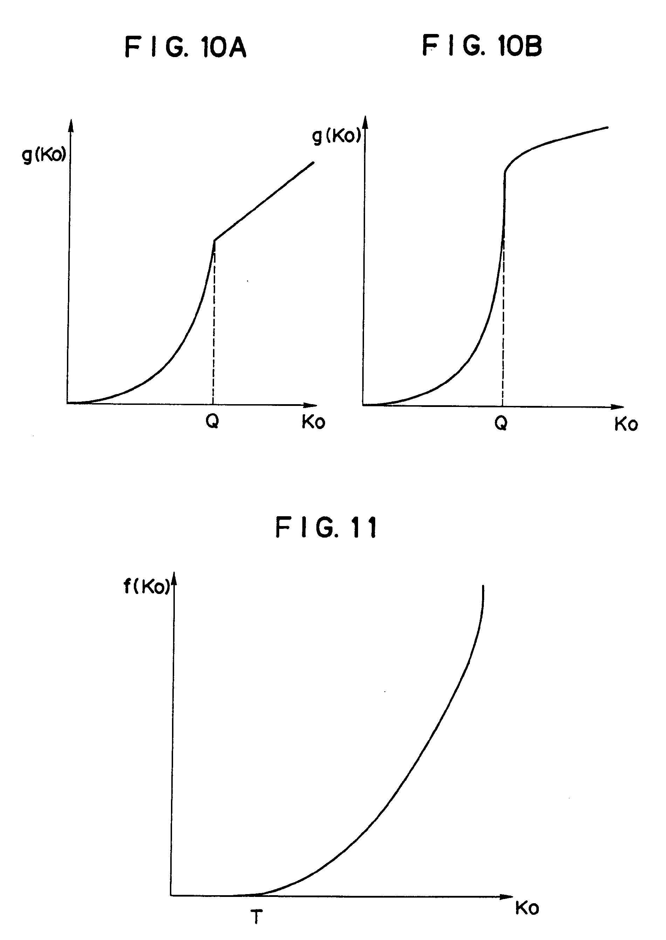

In a third embodiment, the cubic function generators 31a to 31d in Fig. 8 are replaced with a function generator for generating an arbitrary function $g(K_0)$. The function $g(K_0)$ must satisfy a condition that a $dg(K_0)/dK_0$ value linearly increases in the range of $0 < g \leqq Q$ ($0 < Q \leqq FF$). The quadratic functions of the first embodiment and the cubic functions of the second embodiment satisfy the above condition. If any function can satisfy this condition, it need not be expressed by a mathematical relation. Examples are given by a function in Fig. 10A or 10B. If the function $g(K_0)$ is given such that a $dg(K_0)/dK_0$ value linearly increases in the range $0 < q \leqq Q'$ ($0 < QA$: A is a value smaller than FF), generation of the pseudo edge can be prevented and at the same time a total ink amount can reduced.

In the above embodiment, the UCR and black signals pass point (0,0). However, these signals may be shifted to pass point (T,0) in Fig. 11.

In the above embodiment, black extraction and UCR are performed prior to masking after logarithmic conversion is completed. However, the present invention is not limited to this sequence. UCR may be performed after masking. In addition, both black extraction and UCR may be performed after masking.

In the embodiment of Fig. 8, if a back-print film is used in the same manner as in the embodiment of Fig. 1, the modes of operations of the gamma correction circuits 12a, 12b, and 12c or the cubic function generators 31a, 31b, 31c, and 31d may be changed to reduce a total ink amount.

In each of the embodiments described above, a serial scan printer using a multinozzle head shown in Fig. 5 is used. However, the present invention is not limited to this printer. A serial scan printer having a single nozzle, a printer having a full multihead, or a printer utilizing electrostatic process may be used. With such a printer, an amount of toner applied to a recording medium can be reduced, and offset (undesirable toner transfer) of the convey roller can be prevented, thereby performing beautiful full-color image recording. Stripes formed between scanning cycles can be prevented in a serial scan printer according to the present invention, and therefore an effect of the present invention can be maximized.

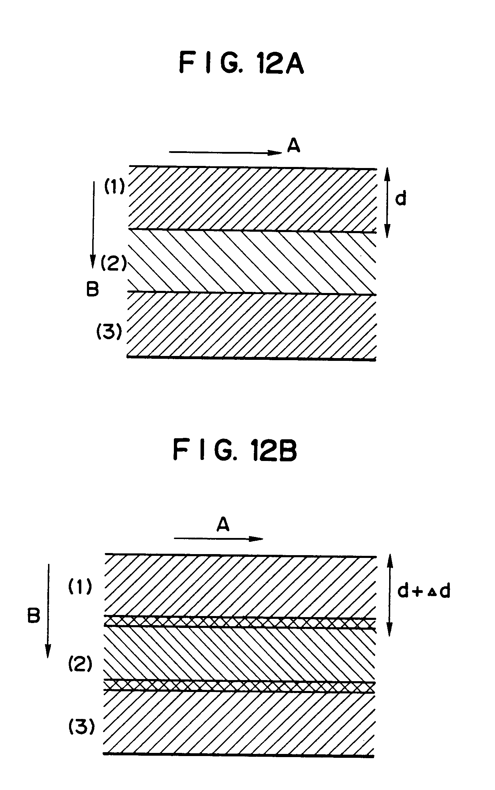

In a serial scan ink-jet printer for repeatedly recording an image every predetermined width by using a head having a width smaller than that of the image, stripes are undesirably formed in a high-density portion between scanning cycles. Figs. 12A and 12B are views for explaining formation of stripes. More specifically, Figs. 12A and 12B show recording patterns on a recording medium which are recorded by a serial scan ink-jet printer for performing image recording by repeating recording every width $\underline{d}$ in an order of (1), (2), and (3). The width $\underline{d}$ is determined by the number of nozzles and a recording density. If there are 256 nozzles and recording is performed at a density of 400 dpi, the width $\underline{d}$ is given as 256 < 25.4/400 = 16.256 mm. Fig. 12A shows a case wherein printing is performed with one color and an amount of ink used is small. The ink can be sufficiently absorbed by the recording material, and the width of a printed image is almost equal to that of the recording width $\underline{d}$. For this reason, when the recording head is scanned in the A direction after the recording head is scanned by $\underline{d}$ in the B direction, the stripes are not formed between the adjacent scanning cycles.

However, when image recording in a high-density portion is performed, the ink absorbing layer cannot satisfactorily absorb the recording ink, and the ink is spread in the vertical direction in Fig. 12B. Therefore, a printed image width becomes d + $\Delta$d.

In this case, if a scanning width of the recording head in the B direction is given as $\underline{d}$, the adjacent images overlap by $\Delta$d, and this overlap portion appears as a black stripe. If the scanning width in the B direction is set to be d + $\Delta$d in order to prevent this black stripe, a white stripe appears in a low-density portion. Therefore, an amount of ink used is very important in the serial scan printer.

According to the methods of the present invention, a total amount of ink injected to the recording medium can be reduced, and therefore formation of stripes between adjacent scanning cycles can be prevented.

The three color signals input to the image processor of the present invention may be supplied from an external device such as a memory or may be read by a reader having a CCD sensor or the like.

The recording medium according to the present invention is not limited to a two-layered structure (Fig. 2) consisting of a transparent substrate and an ink absorbing layer. As shown in Fig. 3, the recording medium may comprise a three-layered structure including an ink absorbing layer 102 which consists of an ink transporting layer 103 and an ink retaining layer 104. In this case, the injected ink can be strongly retained by the ink retaining layer, and an amount of ink left in the ink transporting layer is small. Therefore, an amount of ink in the inner surface of the transparent layer can be increased, thereby obtaining an image having a higher density.

The effect of the present invention can be maximized in the back-print film since an amount of ink retained by its ink retaining layer is relatively small.

In each of the above embodiments, subtractive primary (Y, M, and C) signals are obtained as the primary color signals. A minimum value is directly derived from the Y, M, and C signals as a value corresponding to the minimum value of the primary color signals. However, a maximum value of R, G, and B signals may be obtained as a value corresponding to the minimum value of the primary color signals. It is essential to obtain any value corresponding to the minimum value of the Y, M, and C signals.

According to the present invention as has been described above, when the primary color signals obtained by reading a color image are processed, a value transformed by a continuous function having a minimum peak in accordance with a value corresponding to the minimum value of the primary color signals is given as a color reproduction signal. Therefore, a decrease in saturation level in a low-density portion and generation of a pseudo edge can be prevented. Therefore, a good color image can be reproduced.

## Claims

1. A method of processing first color image signals to obtain a set of second image signals which comprises first primary color, second primary color, third primary color and black reproduction signals, comprising inputting the said first set and obtaining a value ($K_0$) representing the density of the smallest signal of said second set, and characterised in that said value is multiplied by a continuous function (F), the funtion (F) being a curve having a slope of which the differential (df/dg) per variable g is positive within a region $0<g<G$, where $0<G<g_{MAX}$ to obtain a transformed value and utilising said transformed value to generate said black reproduction signal.

2. A method according to claim 1, wherein said continuous function is a quadratic function.

3. A method according to claim 1, wherein said continuous function is a cubic function.

4. A method according to any one of the preceding claims, further comprising the step of multiplying the value corresponding to the minimum value with a predetermined coefficient during transformation by said continuous function, thereby obtaining said black reproduction signal.

5. A method according to any one of the preceding claims, wherein said first color signals are R, G and B signals.

6. A method according to any one of the preceding claims, wherein said continuous function passes through an origin.

7. A method according to any one of the preceding claims, wherein said reproduction signals are those of an ink jet recording system.

8. A method according to claim 7, wherein said reproduction signals are used in recording on a backprint film by using an ink jet system.

9. A method according to any one of the preceding claims, further comprising the step of:
   subtracting said transformed value from said first, said second and said third primary color signals to output a first, a second and a third primary color reproduction signal.

10. A method according to any one of the preceding claims, wherein
   said value is multiplied outside the range $0 < g < G$ by a second function different from the continuous function (f).

11. An apparatus for processing a set of first color image signals to obtain a set of second color image signals, comprising:

processing means (2a,2b,2c) for processing a set of first color image signals to obtain a second set of color image signals including a first, a second and a third primary color reproduction signal and a black reproduction signal, wherein the value of said black reproduction signal corresponds to a transformed value, said processing means comprising:
   determining means (4) for determining a minimum value from said first, said second and said third primary color signals; and characterised in that there is additionally provided
   means (26) for obtaining said transformed value by utilising a continuous function (f), the function (f) being a curve having a slope of which the differential (df/dg) per variable g is positive within a region $0<g<G$, where $0<G<g_{MAX}$ to obtain a transformed value and means for utilising said transformed value to generate said black reproduction signal.

12. An apparatus according to claim 11, wherein said second function is either a quadratic or a cubic function.

13. An apparatus according to either of claims 11 or 12 and including means for multiplying said value by a second function different from the continuous function (f) in a range outside the range $0 < g < G$.

**Patentansprüche**

1. Verfahren zum Verarbeiten erster Farbbildsignale zum Erhalten eines Satzes von zweiten Bildsignalen, welcher erste Primärfarben-, zweite Primärfarben-, dritte Primärfarben- und Schwarzreproduktionssignale aufweist, umfassend Eingeben des ersten Satzes und Erhalten eines Wertes ($K_0$), der die Dichte des kleinsten Signals des zweiten Satzes repräsentiert, und dadurch gekennzeichnet, daß der Wert mit einer kontinuierlichen Funktion (f) multipliziert wird, wobei die Funktion (f) eine Kurve mit einer Steigung ist, von welcher das Differential (df/dg) nach einer Variablen g innerhalb eines Bereiches $0<g<G$, wobei $0<G<g_{max}$, positiv ist um einen transformierten Wert zu erhalten, und Verwenden des transformierten Wertes zur Erzeugung des Schwarzreproduktionssignals.

2. Verfahren nach Anspruch 1, wobei die kontinuierliche Funktion eine quadratische Funktion ist.

3. Verfahren nach Anspruch 1, wobei die kontinierliche Funktion eine kubische Funktion ist.

4. Verfahren nach einem der vorhergehenden Ansprüche, ferner aufweisend den Schritt eines Multiplizierens des dem Minimalwert entsprechenden Wertes mit einem vorbestimmten Koeffizienten während der Transformation durch die kontinuierliche Funktion, wodurch das Schwarzreproduktionssignal erhalten wird.

5. Verfahren nach einem der vorhergehenden Ansprüche, wobei die ersten Farbsignale R-, G- und B-Signale sind.

6. Verfahren nach einem der vorhergehenden Ansprüche, wobei die kontinuierliche Funktion durch den Ursprung verläuft.

7. Verfahren nach einem der vorhergehenden Ansprüche, wobei die Reproduktionssignale die eines Tintenstrahlaufzeichnungssystems sind.

8. Verfahren nach Anspruch 7, wobei die Reproduktionssignale zur Aufzeichnung auf einen Rückdruckfilm unter Verwendung eines Tintenstrahlsystems verwendet werden.

9. Verfahren nach einem der vorhergehenden Ansprüche, ferner aufweisend den Schritt:

Subtrahieren des transformierten Wertes von den ersten, zweiten und dritten Primärfarbsignalen zur Ausgabe eines ersten, eines zweiten und eines dritten Primärfarbreproduktionssignals.

10. Verfahren nach einem der vorhergehenden Ansprüche, wobei

der Wert außerhalb des Bereiches $0 < g < G$ mit einer zweiten, von der kontinuierlichen Funktion (f) verschiedenen Funktion multipliziert wird.

11. Gerät zur Verarbeitung eines Satzes von ersten Farbbildsignalen zum Erhalten eines Satzes von zweiten Farbbildsignalen mit:

einer Verarbeitungsvorrichtung (2a, 2b, 2c) zum Verarbeiten eines Satzes von ersten Farbbildsignalen zum Erhalten eines zweiten Satzes von Farbbildsignalen enthaltend ein erstes, ein zweites und ein drittes Primärfarbreproduktionssignal und ein Schwarzreproduktionssignal, wobei der Wert des Schwarzreproduktionssignals einem transformierten Wert entspricht, wobei die Verarbeitungsvorrichtung aufweist:

eine Bestimmungsvorrichtung (4) zum Bestimmen eines Minimalwertes aus den ersten, zweiten und dritten Primärfarbsignalen, und dadurch gekennzeichnet, daß zusätzlich vorgesehen ist

eine Vorrichtung (26) zum Erhalten des transformierten Wertes durch Verwendung einer kontinuierlichen Funktion (f), wobei die Funktion (f) eine Kurve ist mit einer Steigung, von welcher das Differential (df/dg) nach einer Variablen g innerhalb eines Bereiches $0<g<G$, wobei $0<G<g_{max}$, positiv ist, zum Erhalten eines transformierten Wertes und eine Vorrichtung zum Verwenden des transformierten Wertes zur Erzeugung des Schwarzreproduktionssignals.

12. Gerät nach Anspruch 11, wobei die zweite Funktion entweder eine quadratische oder eine kubische Funktion ist.

13. Gerät nach einem der Ansprüche 11 oder 12 und enthaltend eine Vorrichtung zum Multiplizieren des Wertes mit einer von der kontinuierlichen Funktion (f) verschiedenen zweiten Funktion in einem Bereich außerhalb des Bereiches $0 < g < G$.

## Revendications

1. Procédé de traitement de premiers signaux d'image en couleurs pour obtenir une série de seconds signaux d'image, qui comprend des siguaux de reproduction d'une première couleur primaire, d'une deuxième couleur primaire, d'une troisième couleur primaire et noir, comprenant l'introduction de ladite première série et l'obtention d'une valeur ($K_0$) représentant la densité du signal le plus petit de ladite seconde série, et caractérisé en ce que ladite valeur est multipliée par une fonction continue (f), la fonction (f) étant une courbe ayant une pente dont la différentielle (df/dg) par rapport à la variable g est positive dans une région $0 < g < G$, où $0 < G < g_{MAX}$, pour obtenir une valeur transformée et utilisant ladite valeur transformée pour générer ledit signal de reproduction noir.

2. Procédé selon la revendication 1, dans lequel ladite fonction continue est une fonction quadratique.

3. Procédé selon la revendication 1, dans lequel ladite fonction continue est une fonction cubique.

4. Procédé selon l'une quelconque des revendications précédentes, comprenant en outre l'étape de multiplication de la valeur correspondant à la valeur minimum par un coefficient prédéterminé au cours de la transformation par ladite fonction continue, afin d'obtenir ledit signal de reproduction noir.

5. Procédé selon l'une quelconque des revendications précédentes, dans lequel lesdits premiers signaux en couleurs sont des signaux R, G et B.

6. Procédé selon l'une quelconque des revendications précédentes, dans lequel ladite fonction continue passe par une origine.

7. Procédé selon l'une quelconque des revendications précédentes, dans lequel lesdits signaux de reproduction sont ceux d'un système d'enregistrement à jet d'encre.

8. Procédé selon la revendication 7, dans lequel lesdits signaux de reproduction sont utilisés dans l'enregistrement sur un film imprimé au verso en utilisant un système à jet d'encre.

9. Procédé selon l'une quelconque des revendications précédentes, comprenant en outre l'étape de:

soustraction de ladite valeur transformée desdits premier, deuxième et troisième signaux de couleurs primaires pour délivrer un premier, un deuxième et un troisième signaux de reproduction de couleurs primaires.

10. Procédé selon l'une quelconque des revendications précédentes, dans lequel

ladite valeur est multipliée à l'extérieur de la plage $0 < g < G$ par une deuxième fonction différente de la fonction continue (f).

11. Appareil pour traiter une série de premiers signaux d'image en couleurs pour obtenir une série de deuxièmes signaux d'image en couleurs, comprenant:

un moyen de traitement (2a, 2b, 2c) pour traiter une série de premiers signaux d'image en couleurs afin d'obtenir une deuxième série de signaux d'image en couleurs incluant un premier, un deuxième et un troisième signaux de reproduction de couleurs primaires et un signal de reproduction noir, dans lequel la valeur dudit signal de reproduction noir correspond à une valeur transformée, ledit moyen de traitement comprenant:

un moyen de détermination (4) pour déterminer une valeur minimum à partir desdits premier, deuxième et troisième signaux de couleurs primaires; et caractérisé en ce qu'il est en outre pourvu

d'un moyen (26) pour obtenir ladite valeur transformée en utilisant une fonction continue (f), la fonction (f) étant une courbe ayant une pente dont la différentielle (df/dg) par rapport à la variable g est positive dans une région $0 < g < G$, où $0 < G < g_{MAX}$, pour obtenir une valeur transformée et un moyen pour utiliser ladite valeur transformée afin de générer ledit signal de reproduction noir.

12. Appareil selon la revendication 11, dans lequel ladite deuxième fonction est soit une fonction quadratique soit une fonction cubique.

13. Appareil selon l'une des revendications 11 ou 12, et comportant un moyen pour multiplier ladite valeur par une deuxième fonction différente de la fonction continue (f) dans une plage à l'extérieur de la plage $0 < g < G$.

F I G. 1

# F I G. 2

# F I G. 3

# F I G. 4

# F I G. 5

# F I G. 6A

# F I G. 6B

F I G. 7

FIG. 8

# F I G. 9

# F I G. 10A

# F I G. 10B

# F I G. 11

## F I G. 12A

## F I G. 12B